# FASCICULE DE BREVET EUROPEEN

(11) **EP 3 049 545 B1**
(45) Date de publication et mention de la délivrance du brevet: **24.04.2019**
(21) Numéro de dépôt: 14784308.0
(22) Date de dépôt: 17.09.2014
(51) Int. Cl.: C23C 10/20, B01J 19/24, B01J 19/02, B01J 19/00, F28F 19/02, B05D 1/02, F28D 9/00

(54) **PROCÉDÉ DE DÉPÔT D'UN REVÊTEMENT PROTECTEUR CONTRE LA CORROSION**
VERFAHREN ZUR ABSCHEIDUNG EINER ANTIKORROSIONSBESCHICHTUNG
METHOD FOR DEPOSITING AN ANTI-CORROSION COATING

(30) Priorité: 24.09.2013 FR 1359156
(43) Date de publication de la demande: 03.08.2016
(73) Titulaire: L'Air Liquide Société Anonyme pour l'Etude et l'Exploitation des Procédés Georges Claude, 75007 Paris (FR); Université de Limoges, 87032 Limoges (FR); Université de Lorraine, 54052 Nancy Cedex (FR); Centre National de la Recherche Scientifique (C.N.R.S.), 75794 Paris Cedex 16 (FR)
(72) Inventeur: CHARTIER, Thierry, F-87220 Feytiat (FR); DEL-GALLO, Pascal, F-91410 Dourdan (FR); DOUBLET, Sébastien, 91430 Vauhallan (FR); MATHIEU, Stéphane, F-54600 Villers Les Nancy (FR); MAZET, Thierry, F-54000 Nancy (FR); PROST, Laurent, F-91190 Gif Sur Yvette (FR); RAMENATTE, Nicolas, F-54425 Pulnoy (FR); ROSSIGNOL, Fabrice, F-87430 Verneuil Sur Vienne (FR); VILASI, Michel, F-54136 Bouxieres aux Dames (FR)
(74) Mandataire: Laigneau, Amandine
(86) Numéro de dépôt international: PCT/FR2014/052310
(87) Numéro de publication internationale: WO 2015/044559

(56) Documents cités:
- EP-A1- 1 065 296
- EP-A1- 1 091 021
- EP-A1- 1 591 552
- EP-A2- 1 361 338
- EP-A2- 1 801 353
- EP-A2- 2 172 579
- WO-A1-2007/047373
- WO-A2-2005/094982
- US-B1- 6 887 519

## Description

La présente invention est relative à la réalisation d'un revêtement protecteur contre la corrosion sur un substrat présentant des cavités.

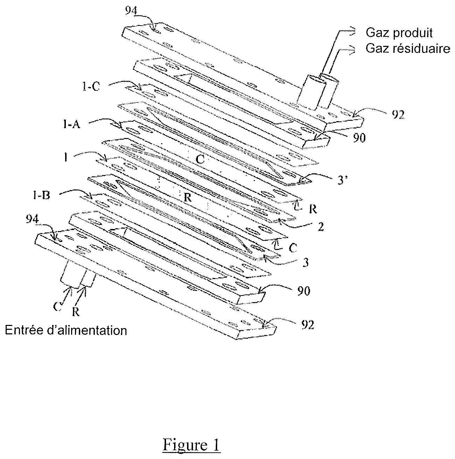

Dans un contexte d'intensification des procédés industriels employés par les industries pétrolières et chimiques, les ingénieries concernées cherchent à améliorer l'efficacité des unités qu'elles conçoivent. De manière à accroitre l'efficacité, l'approche suivie durant le développement de nouvelles unités de production est le remplacement, lorsque cela est possible, des échangeurs et des réacteurs par des appareils de type échangeurs ou échangeur-réacteurs structurés, comme illustré figure 1, permettant une forte amélioration du rendement de l'unité. Ces échangeurs ou échangeurs - réacteurs permettent : (1) d'avoir des transferts de masse et de chaleur beaucoup plus efficaces dû à leur rapport volume sur surface élevé, (2) une bonne stabilité thermique et structurelle et (3) un contrôle plus fin des conditions opératoires du procédé conduisant à un rendement de production plus élevé. Ces appareils sont constitués, le plus souvent, de plaques rainurées assemblées, constituant des canaux de taille millimétriques.

Lorsque cette technologie est employée dans des procédés de craquage ou de reformage d'hydrocarbures comme par exemple le procédé de reformage du méthane à la vapeur employé pour la production industrielle de gaz de synthèse, les parois des canaux des échangeurs ou échangeurs-réacteurs doivent être recouvertes d'un revêtement de protection de manière à faire barrage aux effets catastrophiques de l'importante activité carbone qui règne au sein de ces procédés. Ces conditions sont à l'origine des phénomènes dits de « Metal Dusting », étant caractérisés par une désintégration des alliages en particules de métal et de graphite, conduisant ainsi à la ruine de ces échangeurs ou échangeurs-réacteurs s'ils ne sont pas protégés.

Les revêtements de protection utilisés peuvent être à base d'aluminium ou de chrome de manière à développer des couches d'oxydes stables de type α-Al₂O₃ ou Cr₂O₃ protectrices. On procède en général à un dépôt de l'aluminium ou du chrome en phase gazeuse, opération qui est encore désigné par aluminisation ou chromisation en phase gazeuse. L'oxyde d'aluminium ou de chrome est ensuite obtenu soit par une étape d'oxydation spécifique en four sous pression partielle d'oxygène contrôlée ou non, soit en utilisant directement l'échangeur ou échangeur-réacteur sous atmosphère oxydante.

Les techniques de dépôt en phase vapeur utilisent un précurseur gazeux du revêtement à réaliser. Ce précurseur peut être produit à proximité directe de la surface à revêtir (cémentation en caisse) ou être transporté via un gaz sur la surface à revêtir (out of pack, CVD à partir de bouteille ou mélange gazeux,...). Les principales difficultés rencontrées pour la cémentation en caisse sont liées au remplissage de pièces présentant une géométrie complexe ou de très petites dimensions (quelques mm) avec la poudre de cément (mélange précurseur du revêtement). Les principales limitations des techniques utilisant des précurseurs gazeux concernent l'appauvrissement rapide du mélange gazeux en espèces réactives entrainant des hétérogénéités de composition chimique et/ou d'épaisseur du revêtement. Il est très difficile d'obtenir un revêtement homogène sur de grandes longueurs ou sur des surfaces difficiles d'accès.

Les documents EP 1 065 296 A1 et EP 1 091 021 A1 décrivent quant à eux l'utilisation d'une suspension pour la réalisation d'un revêtement protecteur.

Partant de là, un problème qui se pose est de fournir un procédé amélioré pour la réalisation d'un revêtement homogène sur des surfaces difficiles d'accès, c'est-à-dire principalement sur des substrats présentant au moins une cavité de taille caractéristique de l'ordre du millimètre et des rapports longueur / largeur élevés

Une solution de la présente invention est un procédé de dépôt d'un revêtement protecteur contre la corrosion sur au moins une partie des surfaces d'un substrat métallique présentant au moins une cavité de diamètre équivalent eₘₘ < 2 mm, de préférence inférieur à 1 mm, et de rapport longueur / largeur supérieur à 150, de préférence supérieur à 300, mettant en oeuvre une suspension aqueuse comprenant de la poudre du métal à déposer sur le substrat associée à un agent protecteur, un diluant, et au moins un additif , les particules de la suspension présentant chacune un diamètre équivalent d tel que d ≤ eₘₘ/10.

L'additif peut être choisi entre un agent liant, un dispersant, un complexant, un mouillant ou un plastifiant. L'additif permet de favoriser le mouillage de la surface à revêtir.

Notons que la suspension aqueuse peut également comprendre un agent activant.

Le métal à déposer est de l'aluminium.

Autrement dit la suspension aqueuse telle que décrite ci-dessus peut-être utilisée pour l'élaboration d'un revêtement protecteur contre la corrosion.

L'utilisation d'une suspension en phase aqueuse permet de répartir, de manière homogène et avec un taux de recouvrement compris entre 90 et 100%, et de préférence supérieur à 95%, les précurseurs du revêtement, même sur des surfaces difficiles d'accès telles que définies précédemment.

La suspension mise en oeuvre dans le cadre de l'invention a des caractéristiques proches d'une peinture.

Le procédé selon l'invention comprend les étapes successives suivantes :
a) on prépare la suspension aqueuse comprenant de la poudre du métal à déposer sur le substrat associé à un agent protecteur, un diluant, et au moins un additif permettant de favoriser le mouillage de la surface à revêtir et maîtriser l'épaisseur déposée, les particules de la suspension présentant chacune un diamètre équivalent d tel que d ≤ eₘₘ/10 ;
b) on applique la suspension aqueuse préparée à l'étape a) sur au moins une partie des surfaces des cavités du substrat métallique;
c) on chauffe l'ensemble substrat-suspension à une température inférieure à 150°C de manière à éliminer le solvant aqueux ;
d) on chauffe l'ensemble substrat-suspension à une température comprise entre 400°C et 500°C pendant 1 à 10 heures sous gaz inerte, réducteur ou sous vide de manière à éliminer les composés organiques ;
e) on effectue un traitement thermique de diffusion de l'aluminium vers le substrat à une température comprise entre 500°C et 700°C pendant 1 à 10 heures sous gaz inerte, réducteur ou sous vide
f) on élimine les résidus de poudre du substrat revêtu,
g) on chauffe le substrat revêtu à une température comprise entre 900 et 1100°C pendant 1 à 5 heures, et
h) on récupère un substrat présentant des cavités revêtues d'un revêtement protecteur contre la corrosion.

L'étape g) permet de faire réagir les éléments constitutifs du revêtement avec le substrat à protéger et de former le revêtement final.

D'autre part, selon le cas, le procédé selon l'invention peut présenter une ou plusieurs des caractéristiques suivantes :
- ledit procédé comprend successivement entre les étapes a) et b) une première étape de nettoyage du substrat avec au moins une solution aqueuse, une seconde étape au cours de laquelle le substrat est soumis aux ultrasons et une troisième étape de séchage du substrat sous flux d'air sec.
- la suspension comprend un agent activant et ledit comprend entre l'étape a) et la première étape de nettoyage une étape de décapage des surfaces du substrat à revêtir.
- l'étape b) d'application de la solution aqueuse est effectuée: par immersion du substrat dans la solution aqueuse, par injection de la suspension aqueuse sur le substrat, ou par application au pinceau de la solution aqueuse sur le substrat.
- au cours de l'étape c) de l'air sec est introduit à l'intérieur des cavités du substrat.
- l'étape f) d'élimination des résidus de poudre est réalisée par lavage au moyen de solutions aqueuses.
- le substrat est un échangeur métallique.

La suspension en phase aqueuse utilisée dans le cadre de la présente invention présente une formulation simplifiée et est facilement industrialisable où :
- l'eau est le solvant utilisé et est donc facilement mis en oeuvre à l'échelle industrielle,
- les réactifs employés sont conformes à la règlementation REACH (EC 1907/2006)
- l'emploi d'additifs est en nombre limité,
- l'emploi d'agent activant n'est pas nécessairement requis.

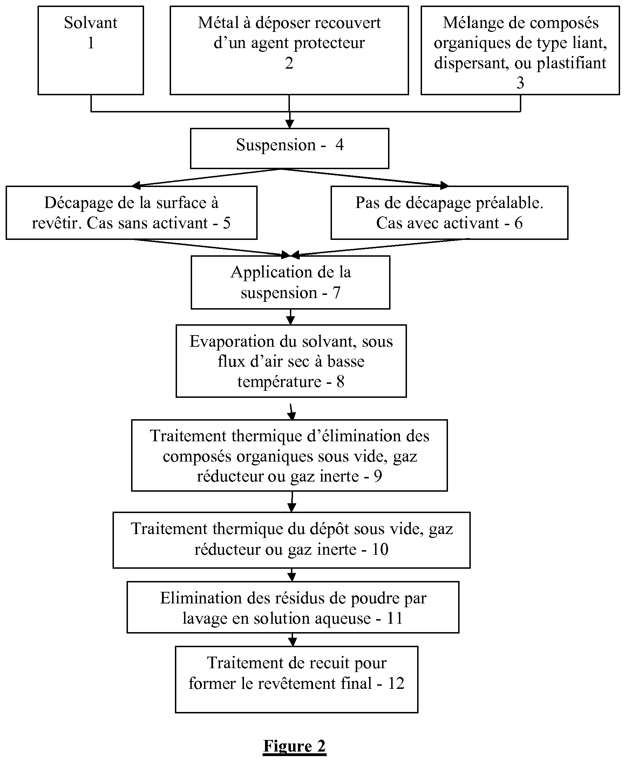

L'invention va être décrite plus en détail à l'aide du schéma en figure 2.

La première étape du procédé est la préparation d'une suspension 4 des poudres utilisées pour la réalisation du revêtement. Les poudres de métal à déposer recouvert d'un agent protecteur 2, sont dans un premier temps broyées afin d'obtenir une distribution granulométrique adaptée à la géométrie du substrat à revêtir. On utilisera des poudres de diamètre moyen 10 fois inférieur à la taille du diamètre moyen des cavités. De plus, si le diluant est également sous forme de poudre, son diamètre moyen devra être environ 100 fois inférieur à celui des poudres de métal. Ces poudres doivent être dispersées de manière homogène dans le solvant 1, c'est-à-dire dans l'eau. La présence d'agglomérats peut entrainer un bouchage de l'entrée de la cavité à revêtir. La principale difficulté consiste à disperser des poudres de natures différentes au sein d'une même suspension. C'est pourquoi des composés organiques 3 (de type liant, dispersant, complexant, mouillant ou plastifiant...) doivent être ajoutés dans la suspension 4 et également afin de favoriser le mouillage sur la surface à revêtir et contrôler l'épaisseur déposée. Les caractéristiques de la suspension doivent également être adaptées à la technique d'application choisie (pinceau, rouleau, pistolet, immersion,...).

En fonction de l'ajout ou non d'un agent activant (5 ou 6) dans la suspension, un décapage des substrats à revêtir sera réalisé avant dépôt. Dans tous les cas, les surfaces à revêtir sont nettoyées avec des solutions aqueuses, puis elles sont mises aux ultrasons pendant 15 min et enfin elles sont séchées sous flux d'air sec.

La suspension peut être appliquée 7 par différentes techniques, aboutissant au dépôt d'un film homogène sur les surfaces exposées : 1) par immersion du substrat dans la suspension-technique très simple mais le dépôt sera réalisé à l'intérieur et à l'extérieur du substrat, ou 2) par injection de la suspension, ou 3) par application au pinceau. Les zones ne devant pas être recouvertes peuvent être protégées par un masque qui sera retiré avant ou pendant le traitement thermique de dépôt du (ou des) composé(s) constitutif(s) du revêtement.

A la suite de l'application de la suspension, le solvant et les composés organiques utilisés pour la mise en suspension des poudres doivent être éliminés.

Dans un premier temps, le solvant aqueux pourra être éliminé 8 à basse température (150°C maximum). Pour faciliter l'élimination du solvant, un flux d'air sec peut être introduit à l'intérieur du substrat. Lors de cette étape le point critique est de ne pas dégrader le dépôt. Dans un second temps, un traitement thermique 9 est réalisé afin d'éliminer les composés organiques. Il est réalisé à une température comprise entre 400 et 500°C pendant 1 à 10 heures, en fonction des composés organiques employés. Le traitement thermique doit être réalisé sous gaz neutre, ou réducteur, ou sous vide.

Ensuite, un traitement thermique de diffusion 10 consiste à faire réagir le dépôt précédemment obtenu avec les surfaces du substrat à revêtir, résultant en la diffusion du métal qu'il contient dans la pièce métallique et ainsi en la croissance en surface d'un revêtement enrichi en ce métal. Ce traitement sera réalisé à une température comprise entre 500°C et 700°C pendant 1 à 10 heures. Il doit être réalisé sous gaz neutre, ou réducteur, ou sous vide. Après dépôt des éléments constitutifs du revêtement, les résidus de poudre, constituées par les agents diluants et éventuellement activants doivent être éliminés 11. Plusieurs techniques peuvent être utilisées telles que le lavage par des solutions aqueuses.

Finalement, un traitement thermique final 12 peut être réalisé afin de faire réagir les éléments constitutifs du revêtement avec l'alliage à protéger et former le revêtement final. Ce traitement sera réalisé à 900-1100°C pendant 1 à 5 heures.

La présente invention a également pour objet un échangeur ou échangeur-réacteur de chaleur métallique comprenant des canaux présentant un revêtement protecteur contre la corrosion obtenu par le procédé selon l'invention, les canaux présentant un taux de recouvrement supérieur à 90%, de préférence supérieur à 95% ; et de préférence l'épaisseur de la couche de revêtement est comprise entre 50µm et 100µm.

Notons que ledit échangeur ou échangeur-réacteur selon l'invention peut être utilisé pour la production de gaz de synthèse, c'est-à-dire d'un mélange d'hydrogène et de monoxyde de carbone.

### Exemple :

Une suspension a été réalisée à partir des ingrédients suivants : 10g d'eau, 20.12g de poudre d'aluminium à 44µm, 5.37g de poudre d'alumine à 0.3µm, 0.02g d'acide oléique dans 45g d'éthanol, 1.2ml d'alcool polyvinylique, 0.011g de disodium 4,5-dihydroxybenzene-1,3-disulphonate (Tiron C), 0.2ml de siloxane (BYK 348).

La suspension en base aqueuse nécessite peu de moyen. Elle est synthétisée dans un récipient surmonté d'un agitateur. Cette préparation comprend deux étapes, la première consiste à protéger la surface de la poudre d'aluminium et la deuxième en l'élaboration de la suspension. Tout d'abord, l'acide oléique est mis en solution dans l'éthanol, puis la poudre d'aluminium est ajoutée, le tout est agité pendant 2h. L'éthanol est ensuite évaporé. Dans un deuxième temps, le Tiron C est introduit dans l'eau puis la poudre d'alumine est ajoutée, la suspension est ensuite agitée grâce à une sonotrode avec une amplitude de 40% pendant 10 secondes. Le BYK 348 est ensuite introduit, puis la poudre d'aluminium précédemment protégée est ajoutée. Le tout est agité durant 10 min au bout desquelles l'alcool polyvinylique est ajouté. La suspension est conservée sous agitation.

La suspension a ensuite été appliquée par immersion de pièces de dimension 10x30x2mm en alliage Ni-Fe-Cr. Les surfaces à revêtir ont été nettoyées à l'acide chlorhydrique contenant un inhibiteur de corrosion (HMT), puis rincées successivement à l'eau et à l'éthanol dans un bac à ultrasons pendant 15 min. Enfin, elles sont séchées sous flux d'air sec.

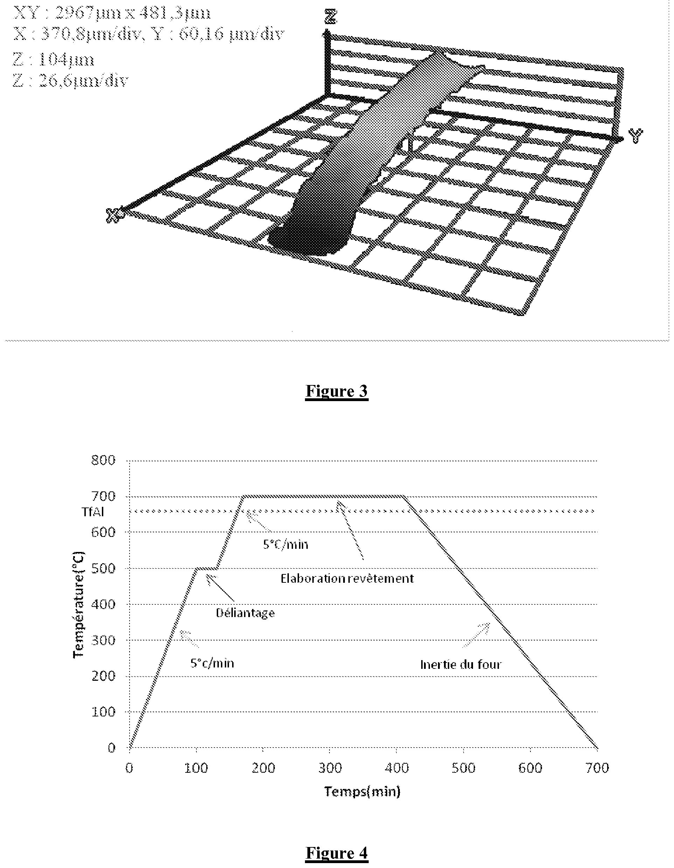

Le dépôt de la suspension est réalisé en 2 étapes successives : (1) immersion des pièces dans la suspension à la température ambiante, (2) tirage continu à vitesse constante de 17mm/s. L'épaisseur de dépôt obtenu est d'environ 100µm. Cette dernière a été contrôlée par profilométrie optique sur plusieurs échantillons témoins, comme illustré en Figure 3 (Evaluation de l'épaisseur du dépôt par profilométrie)
Notons, ce procédé est également applicable à un procédé d'injection dans des pièces disposant des cavités, en remplaçant l'étape (1) par une étape injection complète de la pièce à revêtir.

Ensuite, les pièces présentant le dépôt ont été placées dans un four sous vide où les traitements thermiques correspondant aux étapes 8, 9 et 10 mentionnés en Figure 2 ont pu être réalisés. La Figure 4 (Synthèse des différents paliers et rampes de température) synthétise les différents paliers de température et leur durée.

Les résidus de poudre, constituées par les agents dispersants et activants ont été éliminés, en plaçant les pièces dans une solution d'eau bouillante à l'intérieur d'un bac à ultrasons pendant 15 min.

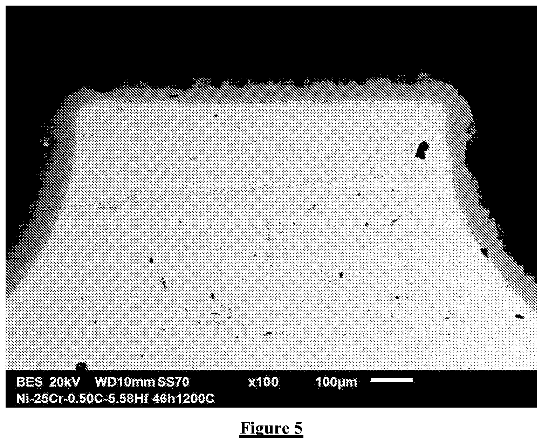

Enfin, un traitement thermique final sous flux d'argon a été réalisé à 980°C pendant 4 heures, afin d'obtenir un revêtement de type NiAl d'environ 50 µm en surface, comme illustré en Figure 5 (Vue en section d'un revêtement élaboré par dépôt à 700°C et recuit à 980°C (épaisseur = 50 µm)).

## Revendications

1. Procédé de dépôt d'un revêtement protecteur contre la corrosion sur au moins une partie des surfaces d'un substrat métallique présentant au moins une cavité de diamètre équivalent eₘₘ < 2 mm et de rapport longueur / largeur supérieur à 150 avec ledit procédé comprenant les étapes successives suivantes :
a) on prépare la suspension aqueuse comprenant de la poudre d'aluminium associé à un agent protecteur de la surface de la poudre de métal, un diluant, et au moins un additif permettant de favoriser le mouillage de la surface à revêtir et maîtriser l'épaisseur déposée, les particules de la suspension présentant chacune un diamètre équivalent d tel que d ≤ eₘₘ/10 ;
b) on applique la suspension aqueuse préparée à l'étape a) sur au moins une partie des surfaces des cavités du substrat métallique;
c) on chauffe l'ensemble substrat-suspension à une température inférieure à 150°C de manière à éliminer le solvant aqueux ;
d) on chauffe l'ensemble substrat-suspension à une température comprise entre 400°C et 500°C pendant 1 à 10 heures sous gaz inerte, réducteur ou sous vide de manière à éliminer les composés organiques ;
e) on effectue un traitement thermique de diffusion de l'aluminium vers le substrat à une température comprise entre 500°C et 700°C pendant 1 à 10 heures sous gaz inerte, réducteur ou sous vide
f) on élimine les résidus de poudre du substrat revêtu,
g) on chauffe le substrat revêtu à une température comprise entre 900 et 1100°C pendant 1 à 5 heures, et
h) on récupère un substrat présentant des cavités revêtues d'un revêtement protecteur contre la corrosion.

2. Procédé selon la revendication 1, **caractérisé en ce que** la suspension aqueuse comprend également un agent activant.

3. Procédé selon l'une des revendications 1 ou 2, **caractérisé en ce que** ledit procédé comprend successivement entre les étapes a) et b) une première étape de nettoyage du substrat avec au moins une solution aqueuse, une seconde étape au cours de laquelle le substrat est soumis aux ultrasons et une troisième étape de séchage du substrat sous flux d'air sec.

4. Procédé selon l'une des revendications 1 ou 2, **caractérisé en ce que** la suspension comprend un agent activant et ledit procédé comprend entre l'étape a) et la première étape de nettoyage une étape de décapage des surfaces du substrat à revêtir.

5. Procédé selon l'une des revendications 1 à 4, **caractérisé en ce que** l'étape b) d'application de la solution aqueuse est effectuée:
- par immersion du substrat dans la solution aqueuse,
- par injection de la suspension aqueuse sur le substrat, ou
- par application au pinceau de la solution aqueuse sur le substrat.

6. Procédé selon l'une des revendications 1 à 5, **caractérisé en ce qu'**au cours de l'étape c) de l'air sec est introduit à l'intérieur des cavités du substrat.

7. Procédé selon l'une des revendications 1 à 6, **caractérisé en ce que** l'étape f) d'élimination des résidus de poudre est réalisée par lavage au moyen de solutions aqueuses.

8. Procédé selon l'une des revendications 1 à 7, **caractérisé en ce que** le substrat est un échangeur métallique.

9. Echangeur ou échangeur-réacteur métallique comprenant des canaux présentant un revêtement protecteur contre la corrosion obtenu par le procédé selon l'une des revendications 1 à 8, les canaux présentant un taux de recouvrement supérieur à 90%, de préférence supérieur à 95%.

10. Echangeur ou échangeur-réacteur métallique selon la revendication 9, **caractérisé en ce que** l'épaisseur de la couche de revêtement est comprise entre 50µm et 100µm.

11. Utilisation d'un échangeur de chaleur selon l'une des revendications 9 ou 10 pour la production de gaz de synthèse.

## Patentansprüche

1. Verfahren zur Ablagerung einer Korrosionsschutzbeschichtung auf mindestens einem Teil der Oberflächen eines metallischen Substrats, das mindestens einen Hohlraum mit einem Äquivalentdurchmesser eₘₘ < 2 mm und mit einem Verhältnis Länge/Breite von mehr als 150 aufweist, wobei das Verfahren die folgenden aufeinanderfolgenden Schritte umfasst:
a) Herstellen der wässrigen Suspension, umfassend Aluminiumpulver in Verbindung mit einem Mittel zum Schutz der Oberfläche des Metallpulvers, ein Verdünnungsmittel und mindestens ein Additiv, das eine Begünstigung der Benetzung der zu beschichtenden Oberfläche und das Kontrollieren der abgelagerten Dicke ermöglicht, wobei die Partikel der Suspension jeweils einen Äquivalentdurchmesser d so aufweisen, dass d ≤ eₘₘ/10;
b) Auftragen der in Schritt a) hergestellten wässrigen Suspension auf mindestens einen Teil der Oberflächen der Hohlräume des metallischen Substrats;
c) Erwärmen der Gesamtheit Substrat-Suspension auf eine Temperatur unter 150 °C, um das wässrige Lösungsmittel zu entfernen;
d) Erwärmen der Gesamtheit Substrat-Suspension auf eine Temperatur zwischen 400 °C und 500 °C für 1 bis 10 Stunden unter inertem, reduzierendem Gas oder im Vakuum, um die organischen Verbindungen zu entfernen;
e) Durchführen einer thermischen Behandlung zur Diffusion des Aluminiums in Richtung des Substrats bei einer Temperatur zwischen 500 °C und 700 °C für 1 bis 10 Stunden unter inertem, reduzierendem Gas oder im Vakuum;
f) Entfernen der Pulverrückstände vom beschichteten Substrat,
g) Erwärmen des beschichteten Substrats auf eine Temperatur zwischen 900 und 1100 °C für 1 bis 5 Stunden und
h) Gewinnen eines Substrats, das mit einer Korrosionsschutzbeschichtung beschichtete Hohlräume aufweist.

2. Verfahren nach Anspruch 1, **dadurch gekennzeichnet, dass** die wässrige Suspension auch ein Aktivierungsmittel umfasst.

3. Verfahren nach einem der Ansprüche 1 oder 2, **dadurch gekennzeichnet, dass** das Verfahren nacheinander zwischen den Schritten a) und b) einen ersten Schritt des Reinigens des Substrats mit mindestens einer wässrigen Lösung, einen zweiten Schritt, in dem das Substrat dem Ultraschall ausgesetzt wird, und einen dritten Schritt des Trocknens des Substrats in einem trockenen Luftstrom umfasst.

4. Verfahren nach einem der Ansprüche 1 oder 2, **dadurch gekennzeichnet, dass** die Suspension ein Aktivierungsmittel umfasst und das Verfahren zwischen Schritt a) und dem ersten Reinigungsschritt einen Schritt des Ätzens der zu beschichtenden Substratoberflächen umfasst.

5. Verfahren nach einem der Ansprüche 1 bis 4, **dadurch gekennzeichnet, dass** Schritt b) des Anwendens der wässrigen Lösung durchgeführt wird:
- durch Eintauchen des Substrats in die wässrige Lösung,
- durch Einspritzen der wässrigen Lösung auf das Substrat oder
- durch Aufstreichen der wässrigen Lösung auf das Substrat.

6. Verfahren nach einem der Ansprüche 1 bis 5, **dadurch gekennzeichnet, dass** in Schritt c) trockene Luft in das Innere der Hohlräume des Substrats eingeführt wird.

7. Verfahren nach einem der Ansprüche 1 bis 6, **dadurch gekennzeichnet, dass** Schritt f) des Entfernens der Pulverrückstände durch Waschen mit wässrigen Lösungen erfolgt.

8. Verfahren nach einem der Ansprüche 1 bis 7, **dadurch gekennzeichnet, dass** das Substrat ein metallischer Austauscher ist.

9. Metallischer Austauscher oder Austauscher-Reaktor, umfassend Kanäle, die eine Korrosionsschutzbeschichtung aufweisen, die durch das Verfahren nach einem der Ansprüche 1 bis 8 erhalten wird, wobei die Kanäle einen Bedeckungsgrad von mehr als 90 %, vorzugsweise von mehr als 95 % aufweisen.

10. Metallischer Austauscher oder Austauscher-Reaktor nach Anspruch 9, **dadurch gekennzeichnet, dass** die Dicke der Beschichtung zwischen 50 µm und 100 µm beträgt.

11. Verwendung eines Wärmeaustauschers nach einem der Ansprüche 9 oder 10 zur Produktion von Synthesegas.

## Claims

1. Method for depositing an anti-corrosion coating on at least one portion of the surfaces of a metal substrate having at least one cavity with an equivalent diameter eₘₘ < 2mm and a length/width ratio greater than 150 with said method comprising the following successive steps:
a) the aqueous suspension is prepared comprising aluminium powder associated with an agent for protecting the surface of the metal powder, a diluent, and at least one additive making it possible to favour the wetting of the surface to be coated and to control the thickness deposited, with the particles of the suspension each having an equivalent diameter d such that d ≤ eₘₘ/10;
b) the aqueous suspension prepared in step a) is applied on at least one portion of the surfaces of the cavities of the metal substrate;
c) the substrate-suspension unit is heated to a temperature less than 150°C so as to remove the aqueous solvent;
d) the substrate-suspension unit is heated to a temperature of between 400°C and 500°C for 1 to 10 hours under inert gas, reducing gas, or in a vacuum so as to remove the organic compounds;
e) a diffusion heat treatment is carried out of the aluminium to the substrate at a temperature of between 500°C and 700°C for 1 to 10 hours under an inert gas, reducing gas or in a vacuum
f) the powder residues are removed from the coated substrate;
g) the coated substrate is heated to a temperature of between 900 and 1100°C for 1 to 5 hours, and
h) a substrate is recovered that has cavities coated with an anti-corrosion coating.

2. Method according to claim 1, **characterised in that** the aqueous suspension also comprises an activating agent.

3. Method according to any of claims 1 or 2, **characterised in that** said method successively comprises between steps a) and b), a first step of cleaning the substrate with at least one aqueous solution, a second step during which the substrate is subjected to ultrasound and a third step of drying the substrate under a dry air flow.

4. Method according to any of claims 1 or 2, **characterised in that** the suspension comprises an activating agent and said method comprises between step a) and the first step of cleaning a step of stripping the surfaces of the substrate to be coated.

5. Method according to any of claims 1 to 4, **characterised in that** step b) of applying the aqueous solution is carried out:
- by immersing the substrate in the aqueous solution,
- by injecting the aqueous suspension on the substrate, or
- by applying with a brush the aqueous solution on the substrate.

6. Method according to any of claims 1 to 5, **characterised in that** during step c), dry air is introduced inside the cavities of the substrate.

7. Method according to any of claims 1 to 6, **characterised in that** step f) of removing the powder residues is carried out by washing by means of aqueous solutions.

8. Method according to any of claims 1 to 7, **characterised in that** the substrate is a metal exchanger.

9. Metal exchanger or exchanger-reactor comprising channels that have an anti-corrosion coating obtained by the method according to any of claims 1 to 8, with the channels having a rate of coverage greater than 90%, preferably greater than 95%.

10. Metal exchanger or exchanger-reactor according to claim 9, **characterised in that** the thickness of the layer of coating is of between 50µm and 100µm.

11. Use of a heat exchanger according to any of claims 9 or 10 to produce synthesis gas.
